Europäisches Patentamt

European Patent Office

Office européen des brevets

(11) Veröffentlichungsnummer: **0 447 612 A2**

# (12) EUROPÄISCHE PATENTANMELDUNG

(21) Anmeldenummer: 90119473.8

(22) Anmeldetag: 11.10.90

(51) Int. Cl.⁵: $B21F$ 19/00, B21C 37/04

(30) Priorität: 23.03.90 DE 4009366

(43) Veröffentlichungstag der Anmeldung:
25.09.91 Patentblatt 91/39

(84) Benannte Vertragsstaaten:
DE GB NL

(71) Anmelder: W.C. Heraeus GmbH
Heraeusstrasse 12 - 14 Postfach 1553
W-6450 Hanau / Main(DE)

(72) Erfinder: Keilberth, Richard
Am Bach 1
W-8761 Weilbach(DE)
Erfinder: Lupton, David Francis, Dr.
Am Rain 8
W-6460 Gelnhausen(DE)

(54) Verfahren zur Herstellung eines metallischen Verbunddrahtes.

(57) Die Erfindung offenbart die Herstellung eines metallischen Verbunddrahtes mit einem Kern aus hartem Werkstoff und einem Mantel aus weichem Werkstoff. Ein Stab aus hartem Werkstoff wird in ein Rohr aus weichem Werkstoff gesteckt. Durch Warmwalzen und Ziehen wird ein Zweierverbund hergestellt, der ein Zwischenmaß besitzt. Die Querschnittsverminderung beträgt während dieser Schritte wenigstens 50 %. Danach wird auf den Zweierverbund erneut ein Rohr aus weichem Werkstoff aufgezogen und der so gewonnene Dreierverbund durch Warm- oder Kaltwalzen und anschließendes Kaltziehen auf Endmaß gebracht.

EP 0 447 612 A2

Die Erfindung bezieht sich auf ein verfahren zur Herstellung eines metallischen Verbunddrahtes mit einem Kern aus hartem Werkstoff und einem Mantel aus weichem Werkstoff, wobei ein Stab aus Kern-Werkstoff in ein Rohr aus Mantel-Werkstoff gesteckt und diese Stab-Rohr-Anordnung in ihrem Querschnitt durch Ziehen auf ein vorgegebenes Maß vermindert wird.

Ein derartiges verfahren ist aus der US-PS 3,848,319 bekannt. Es wird benutzt, um sehr dünne Drähte aus Edelmetall oder einer Edelmetall-Legierung herzustellen. Dabei wird jedoch der Mantelwerkstoff nach dem Ziehen chemisch weggeätzt. Als Kern-Werkstoff dient reines Gold, als Mantel-Werkstoff Kupfer. Bei diesem bekannten verfahren werden Glühschritte vermieden, um eine Diffusion von Gold in Kupfer oder umgekehrt zu vermeiden.

Aus dem US-Patent 4,291,644 ist weiterhin ein verfahren zur Herstellung eines Verbunddrahtes bekannt, bei dem ein harter Kern-Werkstoff mit einem weichen Mantel-Werkstoff durch Extrudieren versehen wird, wobei der Kern durch direkten Stromdurchgang erhitzt und unter konstanter Zugspannung gehalten wird, die bis zu 50 % der Zugfestigkeit des Kern-Werkstoffes beträgt. Als Kern-Werkstoff wird beispielsweise Stahl, als Mantel-Werkstoff Aluminium verwendet.

Aufgabe der vorliegenden Erfindung ist es, ein kostengünstiges Verfahren zur Herstellung quasiendloser Längen eines metallischen Verbunddrahtes mit hartem, schwer verformbarem Kern-Werkstoff und weichem Mantel-Werkstoff bereitzustellen, mit dem Ziel der Bewahrung einer guten Rundheit des Drahtes und der Sicherstellung von Gleichmäßigkeit und Mittigkeit des Kerns.

Gelöst wird diese Aufgabe für das eingangs charakterisierte Verfahren erfindungsgemäß dadurch, daß aus der Stab-Rohr-Anordnung in einem ersten Schritt durch Warmwalzen und anschließendes Ziehen ein auf ein Zwischenmaß gebrachter Zweierverbund hergestellt wird, wobei der Ausgangsquerschnitt der Stab-Rohr-Anordnung einer Querschnittsverminderung von wenigstens 50 % unterworfen wird, daß dann ein Dreierverbund durch Aufziehen eines weiteren Rohres aus Mantel-Werkstoff auf den Zweierverbund hergestellt und danach der Dreierverbund warm- oder kaltgewalzt und anschließend kalt auf Endmaß gezogen wird.

Drähte, die erfindungsgemäß hergestellt werden, haben den Vorteil, daß durch die Anbringung des zweiten Mantels die Gefahren von Unterbrechungen, Poren oder Rissen im Mantel praktisch vermieden werden, so daß eine hohe Sicherheit an Produktqualität gegeben ist. Verbunddrähte mit einem Mantel-Werkstoff aus Platin und einem Kern-Werkstoff aus einer Platin-Legierung, die aus 25 Gew.-% Iridium, Rest Platin, besteht, und deren Außendurchmesser 0,3 mm und der Kern-Durchmesser 0,1 mm beträgt, konnten in Längen von etwa 50 m hergestellt werden. Durch den (die) Warmwalzschritt(e) des Verfahrens wird ein guter haftfester Verbund zwischen Kern- und Mantel-Werkstoff sichergestellt; ein Abplatzen des Mantels vom Kern, auch nur stellenweise, ist dadurch sicher vermieden.

Bewährt hat es sich beim erfindungsgemäßen Verfahren, den Dreierverbund mehrstufig auf Endmaß kalt zu ziehen. Dies hat den Vorteil, daß die Querschnittsverminderung in mehreren kleineren Stufen erfolgt und nicht in einer einzigen Stufe, wodurch ein Zerreißen des Kerns vermieden wird.

Besonders kostengünstig gestaltet sich das erfindungsgemäße Verfahren, wenn als weiteres Rohr ein solches verwendet wird, welches die gleichen Abmessungen besitzt wie das zur Herstellung des Zweierverbundes verwendete Rohr. Dann ist die Vorratshaltung der Rohre sehr einfach, weil nur eine einzige Sorte von Rohren gleicher Abmessungen auf Lager gehalten werden muß. Mit dem erfindungsgemäßen Verfahren lassen sich insbesondere solche Verbunddrähte herstellen, bei denen die Wandstärke des Mantels im Bereich von 15 bis 40 % des Drahtdurchmessers beträgt.

Wie bereits erwähnt, eignet sich das erfindungsgemäße Verfahren besonders zur Herstellung von Verbunddrähten mit einem Mantel-Werkstoff aus Platin und einem Kern-Werkstoff aus einer Platin-Iridium-Legierung, insbesondere einer Legierung, die aus 25 Gew.-% Iridium, Rest Platin besteht. Erfindungsgemäß hergestellte Verbunddrahtstücke mit Platin-Mantel und Platin-Iridium 25 -Kern werden nach ihrer Aktivierung in einem Kernreaktor beispielsweise als Einlagen zum Bestrahlen von Tumorgewebe verwendet.

Nachfolgend wird ein Beispiel für die Durchführung des erfindungsgemäßen Verfahrens angegeben.

Ausgangsmaterial bildet ein Rundstab aus Platin-Iridium 25 mit einem Außendurchmesser von 1,78 mm sowie ein Platin-Rohr mit einem Außendurchmesser von 3,1 mm und einem Innendurchmesser von 1,8 mm. Der Rundstab und das Rohr hatten eine Länge von je 250 mm. Der Rundstab dient als Kern-Werkstoff, das Rohr als Mantel-Werkstoff. Das Rohr wird zunächst auf den Stab aufgezogen, in dem die Stab-Rohr-Anordnung bei Raumtemperatur durch einen Hartmetallziehstein an einen Durchmeser von 3,08 gezogen wird. Danach wird die Stab-Rohr-Anordnung an ein Maß von 1,8 mm warm gewalzt. Die Temperatur beträgt dabei 950 °C, das Walzprofil entspricht einem 8-Kant. Anschließend wird das warmgewalzte Zwischenprodukt kalt rundgezogen auf einen Durchmesser von 1,78 mm. Auf diesen Zweierverbund wird nun wieder ein Platin-Rohr mit gleichen Durchmesserabmessungen wie das Ausgangsrohr jedoch mit einer Länge von 750 mm aufgezogen. Der so gewonnene Dreierverbund wird kaltgewalzt an ein Maß von 1,0 mm und schließlich mit Diamantziehsteinen auf einer Mehrfachziehmaschine an einem Durchmesser von 0,3 mm kalt in mehreren Stufen gezogen mit einer Querschnittsabnahme von 12 % pro Zug. Aus einem Stab und den beiden Rohren mit den angegebenen Abmessungen und einer Länge von 250 mm konnte ein Verbunddraht von 0,3 mm Durchmesser und einer Länge von 70 m hergestellt werden.

## Patentansprüche

1. Verfahren zur Herstellung eines metallischen Verbunddrahtes mit einem Kern aus hartem Werkstoff und einem Mantel aus weichem Werkstoff, wobei ein Stab aus Kern-Werkstoff in ein Rohr aus Mantel-Werkstoff gesteckt und diese Stab-Rohr-Anordnung in ihrem Querschnitt durch Ziehen auf ein vorgegebenes Endmaß vermindert wird, dadurch gekennzeichnet, daß aus der Stab-Rohr-Anordnung in einem ersten Schritt durch Warmwalzen und anschließendes Ziehen ein auf ein Zwischenmaß gebrachter Zweierverbund hergestellt wird, wobei der Ausgangsquerschnitt der Stab-Rohr-Anordnung einer Querschnittsverminderung von wenigstens 50 % unterworfen wird, daß dann ein Dreierverbund durch Aufziehen eines weiteren Rohres aus Mantel-Werkstoff auf den Zweierverbund hergestellt und danach der Dreierverbund warm- oder kaltgewalzt und anschließend kalt auf Endmaß gezogen wird.

2. Verfahren nach Anspruch 1, dadurch gekennzeichnet, daß der Dreierverbund mehrstufig auf Endmaß kalt gezogen wird.

3. Verfahren nach Anspruch 1, dadurch gekennzeichnet, daß als weiteres Rohr ein solches verwendet wird, welches die gleichen Durchmesser-Abmessungen besitzt, wie das zur Herstellung des Zweierverbundes verwendete Rohr.

4. Verfahren nach einem der Ansprüche 1 bis 3, dadurch gekennzeicht, daß der Dreierverbund auf ein solches Endmaß gezogen wird, bei dem die Wandstärke des Mantels im Bereich 15 bis 40 % des Drahtdurchmessers beträgt.

5. Verfahren nach wenigstens einem der Ansprüche 1 bis 5, dadurch gekennzeichnet, daß als Kern-Werkstoff eine Platin-Iridium-Legierung und als Mantel-Werkstoff Platin verwendet wird.

6. Verfahren nach Anspruch 6, dadurch gekennzeichnet, daß als Kern-Werkstoff eine Platin Legierung verwendet wird, die 25-Gew.% Iridium enthält.